# EUROPÄISCHE PATENTSCHRIFT

(11) **EP 3 527 080 B1**
(45) Veröffentlichungstag und Bekanntmachung des Hinweises auf die Patenterteilung: **24.08.2022**
(21) Anmeldenummer: 18157223.1
(22) Anmeldetag: 16.02.2018
(51) Int. Cl.: A21D 13/43

(54) **FLÄCHIGES DAUERBROT, VORZUGSWEISE TROCKENFLACHBROT**
FLAT LONG-LIFE BREAD, PREFERABLY DRY FLAT BREAD
GALETTE, DE PRÉFÉRENCE PAIN CROUSTILLANT

(43) Veröffentlichungstag der Anmeldung: 21.08.2019
(73) Patentinhaber: Griesson - de Beukelaer GmbH & Co. KG, 56751 Polch (DE)
(72) Erfinder: Hajji, Fuad Dr., 56070 Koblenz (DE); Boosfeld, Paul, 56253 Treis-Karden (DE); Dyks, Jutta, 56727 Mayen (DE)
(74) Vertreter: Dr. Stark & Partner Patentanwälte mbB

(56) Entgegenhaltungen:
- WO-A1-00/35291
- WO-A1-97/31539
- DE-T2- 69 721 501
- FR-A1- 2 966 325
- NL-A- 255 103
- US-A- 1 646 921
- US-A1- 2006 019 014
- DATABASE GNPD [Online] MINTEL; Januar 2011 (2011-01), Anonymous: "Sesame Crackers", XP002780797, Database accession no. 1466500
- DATABASE GNPD [Online] MINTEL; Dezember 2010 (2010-12), Anonymous: "Crispbread with Pumpkin Seeds", XP002780798, Database accession no. 1452668
- DATABASE GNPD [Online] MINTEL; November 2017 (2017-11), Anonymous: "Plain Mini Crackers", XP002780799, Database accession no. 5286243
- DATABASE GNPD [Online] MINTEL; April 2016 (2016-04), Anonymous: "Zesty Cheddar Ranch Crispy Cracker Chips", XP002780800, Database accession no. 3948235

## Beschreibung

Griesson - de Beukelaer GmbH & Co. KG, August-Horch-Straße 23, 56751 Polch

### Flächiges Dauerbrot, vorzugsweise Trockenflachbrot

Die Erfindung betrifft ein flächiges Dauerbrot, vorzugsweise Trockenflachbrot, mit einer Oberseite und einer Unterseite sowie mit einer umlaufenden, die Oberseite und die Unterseite verbindenden Seitenkante.

Bestandteile eines Dauerbrotes sind üblicherweise Vollkornschrot, Mehl, wie Vollkornmehl oder Roggenmehl, Weizen oder andere Getreidearten oder auch Mischungen von Getreiden sowie anderer Lebensmittel. Ein solches Knäckebrot wird üblicherweise mit Hefelockerung oder Sauerteiggärung oder Lufteinschlag auf physikalische Weise oder mit sonstigen Lockerungsverfahren hergestellt. Der Feuchtigkeitsgehalt beträgt höchstens 10%. Ein Trockenflachbrot wird auch als Dauerbrot bezeichnet, das durch eine Heißextrusion hergestellt wird. Unter einem flächigen Dauerbrot wird eine bereits verzehrfertige Scheibe eines Getreideerzeugnisses, wie beispielsweise ein Trockenflachbrot, verstanden, das einen geringen Wassergehalt aufweist und bei sachgemäßer Lagerung langfristig haltbar ist.

Aus der DE 697 21 501 T2 ist ein Frischbrot mit einem hohen Wassergehalt bekannt. Die Teigstreifen werden beim Fördern geschnitten. Hierdurch werden in den Teigstreifen Sollbruchstellen eingebracht, um nach dem Backen eine Anzahl von verzehrfertigen Sandwiches zu erhalten. Die DE 10 2013 018 142 A1 beschreibt ein Verfahren und eine Backmischung zur Herstellung eines Trockenflachbrotes. Während des Backens können Sollbruchstellen eingebracht werden. Nach dem Brechen entlang der Sollbruchstellen liegt das verzehrfertige scheibenartige Produkt vor. Nachteilig ist, dass das bekannte Dauerbrot aufgrund seiner Abmessungen nicht in kleine Behältnisse beispielsweise zum Zwecke des Dippens eintauchbar ist.

Aus der Datenbank GNPD [online] MINTEL sind unter den Bezeichnungen "Sesame Crackers solruta", "Plain Mini Crackers LU" und "Zesty Cheddar Ranch Crispy Cracker Chips" sowie aus der NL 255103 und der US-PS 1,646,921 verschiedene Kräcker bekannt. Unter der Bezeichnung "Crispbread with Pumpkin Seeds solruta" ist in der Datenbank GNPD [online] MINTEL ein Knäckebrot bekannt.

Aufgabe der Erfindung ist es, die vorgenannten Nachteile zu vermeiden und ein Dauerbrot anzugeben, das vom Konsumenten ohne ein Hilfswerkzeug und ohne ein unkontrolliertes Zerbrechen, beispielsweise zur Erhöhung der Verzehrmöglichkeiten, in kleinere, vorzugsweise stickähnliche oder streifenförmige, Stücke geteilt werden kann.

Diese Aufgabe wird dadurch gelöst, dass das Dauerbrot wie in den Ansprüchen definiert
- im Bereich der Oberseite zumindest einen als Sollbruchstelle dienenden, linienförmig ausgebildeten vertieften Bereich aufweist, der sich von einer Stelle der Seitenkante bis zu einer anderen Stelle der Seitenkante, nämlich bis zu der gegenüberliegenden Stelle der Seitenkante, erstreckt, und/oder
- im Bereich der Unterseite zumindest einen als Sollbruchstelle dienenden, linienförmig ausgebildeten vertieften Bereich aufweist, der sich von einer Stelle der Seitenkante bis zu einer anderen Stelle der Seitenkante, nämlich bis zu der gegenüberliegenden Stelle der Seitenkante, erstreckt.

Unter einem vertieften Bereich wird eine solche Ausgestaltung verstanden, bei der der betreffende Bereich auf die jeweilige Oberfläche bezogen, d. h. auf die Oberseite bzw. auf die Unterseite bezogen, in das Innere des Dauerbrotes weisend ausgebildet ist. Der/Die vertiefte(n) Bereich(e) wird/werden vor dem Backen des flächigen Dauerbrotes, beispielsweise durch einen Schneidvorgang oder dergleichen, in das Dauerbrot eingebracht.

Durch die erfindungsgemäße Ausgestaltung kann das erfindungsgemäße Dauerbrot entlang eines als Sollbruchstelle dienenden, linienförmig ausgebildeten vertieften Bereiches einfach, sicher und sauber in ein stickähnliches Verzehrprodukt gebrochen werden, ohne dass das Dauerbrot dabei unkontrolliert bricht. Für das Brechen sind keine Hilfsmittel, wie beispielsweise ein Messer, erforderlich, so dass das Dauerbrot letztlich jederzeit und an jedem Ort gebrochen werden kann.

Ferner bietet die erfindungsgemäße Ausgestaltung einen weiteren Vorteil. So kann das Dauerbrot zum einen wie bisher nach Art eines bekannten Butterbrotes, d. h. als Scheibe, verzehrt werden. Das Dauerbrot kann beispielsweise zunächst mit Butter bestrichen und dann mit einem Belag versehen werden. Bevorzugt sind als Sollbruchstellen dienende, linienförmig ausgebildete vertiefte Bereiche auf der Oberseite und auf der Unterseite des Dauerbrotes vorgesehen. Dies verleiht dem Dauerbrot u. a. ein ansprechendes optisches Erscheinungsbild, da die Oberseite und die Unterseite einheitlich und motivgleich gestaltet sind.

Zum anderen ermöglicht die erfindungsgemäße Ausgestaltung die Verwendung des Dauerbrotes auch als stickähnliches Verzehrprodukt in Form eines Knabber-/Snackproduktes, das pur verzehrt oder beispielsweise vorher in einen Dip eingetaucht werden kann. So kann das erfindungsgemäße Dauerbrot entlang eines als Sollbruchstelle dienenden, linienförmig ausgebildeten vertieften Bereiches einfach, sicher und sauber gebrochen werden. Hierdurch entsteht ein zusammenhängendes stickähnliches oder streifenförmiges Produkt und damit ein Knabber-/Snackprodukt, das für den Verzehr beliebig genutzt werden kann. Unter einem stickähnlichen Verzehrprodukt wird ein solches Verzehrprodukt verstanden, dessen Länge im Vergleich zur Breite deutlich größer ist. Damit stellt das erfindungsgemäße Dauerbrot ein kategorie-, produktgruppen- und branchenübergreifendes Getreideerzeugnis dar, was für unterschiedliche Zwecke verwendet und angeboten werden kann.

Nach dem Brechen weisen die dann erzeugten beispielsweise stickähnlich oder streifenförmig ausgebildeten Produkte eine geringere Breite auf, so dass sie auch im Wesentlichen in ein längliches, schmales Behältnis, das kleine Gegenstände aufbewahrt und gleichzeitig schützt und in dem beispielsweise ein Dip bevorratet ist, eingetaucht werden können. Die Bruchstellen weisen dabei aufgrund des Brechvorganges eine raue Oberfläche auf. Diese raue Oberfläche verbessert das Anhaften auch von hochviskosen/pastösen Nahrungsmitteln, wie Dips/Saucen/Brotaufstriche, an dem Produkt, wenn das abgebrochene Produkt darin eingetaucht worden ist. Die Dips/Saucen können beliebig, wie beispielsweise würzig, süß, warm, kalt oder dergleichen sein.

Jeder vertiefte Bereich kann auch zur Bevorratung von Körnern oder anderen körnerförmigen Geschmacksstoffen, wie Gewürzen oder dergleichen, dienen, sofern die Abmessungen geringer als die Breite des betreffenden vertieften Bereichs sind. In den vertieften Bereichen besteht neben dem chemischen Hafteffekt insoweit auch ein besserer mechanischer Hafteffekt. Als körnerförmige Geschmacksstoffe sind auch selbstklebende essbare Partikel beispielsweise aus Gewürzen, aus Gewürzzubereitungen oder Stoffen mineralischer Herkunft, wie beispielsweise Kochsalz, denkbar.

Sofern das erzeugte Produkt beispielsweise streifenförmig ausgebildet ist, bietet das Produkt dem Benutzer im Bereich seiner beiden Enden einen ausreichenden Haltebereich zum Anfassen. Damit wird ein unerwünschter Kontakt der Finger bei einem Eintauchen, beispielsweise in eine "Dip-Sauce", vermieden.

Unter "flächig" wird eine Ausgestaltung verstanden, bei der das Dauerbrot eine breite Fläche bildet und sich insoweit primär nur in der Fläche ausdehnt. Die Dauerbackware weist eine zu den Abmessungen der Fläche deutlich geringere Höhe auf. Die Oberseite und die Unterseite können flach sein, können aber auch Erhebungen geringer Höhe aufweisen. Auch eine leichte konvexe Erhebung auf der Ober- und/oder Unterseite sind möglich.

Es bietet sich an, wenn zumindest ein vertiefter Bereich geradlinig ausgebildet ist. Selbstverständlich sind auch andere Verläufe, wie beispielsweise gekrümmte oder wellenförmige Verläufe, denkbar.

Das Dauerbrot kann viereckig, vorzugsweise rechteckig, ausgebildet sein, und die umlaufende Seitenkante kann aus zwei Paaren an gegenüberliegenden Seitenkanten gebildet sein. Bei einer rechteckigen Ausgestaltung bildet das eine Paar gegenüberliegender Seitenkanten die üblicherweise längeren Seitenkanten und das zweite Paar gegenüberliegender Seitenkanten die üblicherweise kürzeren Stirnkanten.

Es bietet sich an, wenn sich zumindest ein vertiefter Bereich, vorzugsweise alle vertieften Bereiche, parallel zu den üblicherweise längeren Seitenkanten erstreckt(en), so dass dann die vertieften Bereiche die gegenüberliegenden kürzeren Stirnkanten verbinden. Die Länge L eines rechteckigen Dauerbrotes beträgt üblicherweise zwischen 8 cm und 15 cm, bevorzugt zwischen 10 cm und 13 cm.

Das Dauerbrot kann eine Länge L zwischen 8 cm und 15 cm, vorzugsweise zwischen 10 cm und 13 cm, und eine Breite X zwischen 4 cm und 9 cm, vorzugsweise zwischen 6 cm und 8 cm, haben.

Die Dicke D des Dauerbrotes kann zwischen 5,5 mm und 9,5 mm, vorzugsweise zwischen 6,5 mm und 9,0 mm, besonders bevorzugt zwischen 7,3 mm und 8,7 mm, liegen.

Dabei liegt der Wassergehalt des Dauerbrots nach dem Herstellungsprozess zwischen 3 % und 9 %, vorzugsweise zwischen 4 % und 8,5 %, besonders bevorzugt zwischen 5 % und 6,5 %.

Zumindest ein vertiefter Bereich kann parallel zu einem der beiden Paare an gegenüberliegender Seitenkanten ausgerichtet sein.

Das Dauerbrot weist im Bereich seiner Oberseite mehrere parallel zueinander ausgerichtete, vertiefte Bereiche auf und/oder das Dauerbrot weist im Bereich seiner Unterseite mehrere parallel zueinander ausgerichtete, vertiefte Bereiche auf.

Im Bereich der Oberseite kann ein vertiefter Bereich vorgesehen sein, der mittig im Bereich der Oberseite angeordnet ist, und/oder im Bereich der Unterseite kann ein vertiefter Bereich vorgesehen sein, der mittig im Bereich der Unterseite angeordnet ist.

Zumindest ein vertiefter Bereich kann als Einkerbung ausgebildet sein. Hierunter wird ein vertiefter Bereich mit einer geringeren Breite B verstanden, der beispielsweise spitz zulaufend oder keilförmig ausgebildet ist.

Zumindest ein vertiefter Bereich ist als Nut mit einem rechteckigen Querschnitt ausgebildet.

Zumindest ein vertiefter Bereich kann durch zwei den vertieften Bereich bildende Kantenbereiche gebildet sein und zumindest einer, vorzugsweise jeder, der beiden Kantenbereiche kann abgerundet oder abgeschrägt oder stufig ausgebildet sein. Die Abrundung, die Abschrägung oder die Stufigkeit können beliebig ausgebildet sein.

Die maximale Breite B bei zumindest einem vertieften Bereich beträgt zwischen 0,2 mm und 10 mm, vorzugsweise zwischen 0,4 mm und 1,5 mm, besonders bevorzugt 0,5 mm.

Die Tiefe T bei zumindest einem vertieften Bereich beträgt zwischen 0,5 mm und 3 mm, vorzugsweise zwischen 1 mm und 2,5 mm, besonders bevorzugt zwischen 1,5 mm und 2 mm.

Der Abstand A zwischen zwei benachbarten vertieften Bereichen beträgt auf der Oberseite zwischen 0,1 cm und 3 cm, vorzugsweise zwischen 1 cm und 2,5 mm, besonders bevorzugt 1,5 cm, und/oder der Abstand A zwischen zwei benachbarten vertieften Bereichen beträgt auf der Unterseite zwischen 0,1 cm und 3 cm, vorzugsweise zwischen 1 cm und 2,5 mm, besonders bevorzugt 1,5 cm.

Das Dauerbrot kann sowohl auf seiner Oberseite als auch auf seiner Unterseite jeweils zumindest einen vertieften Bereich aufweisen, wobei der (die) vertiefte(n) Bereich(e) auf der Unterseite und der (die) vertiefte(n) Bereich(e) auf der Oberseite entlang ihrer gesamten Längserstreckung gegenüberliegend angeordnet sind.

Das Dauerbrot kann sowohl auf seiner Oberseite als auch auf seiner Unterseite jeweils zumindest einen vertieften Bereich aufweisen, wobei der (die) vertiefte(n) Bereich(e) auf der Unterseite gegenüber dem (den) vertieften Bereich(en) auf der Oberseite versetzt, vorzugsweise um den halben Abstand zwischen zwei benachbarten vertieften Bereichen entlang ihrer gesamten Längserstreckung parallel versetzt, angeordnet sind.

Sämtliche vertieften Bereiche der Oberseite können jeweils den gleichen Querschnitt aufweisen, und/oder sämtliche vertieften Bereiche der Unterseite können jeweils den gleichen Querschnitt aufweisen.

Sämtliche vertieften Bereiche der Oberseite können den gleichen Querschnitt aufweisen, sämtliche vertieften Bereiche der Unterseite können den gleichen Querschnitt aufweisen und die Querschnitte im Bereich der Oberseite und im Bereich der Unterseite können abweichend sein.

Die Oberseite weist in den Bereichen außerhalb des (der) vertieften Bereichs (Bereiche) vollständig eine raue Oberfläche auf und die Unterseite weist in den Bereichen außerhalb des (der) vertieften Bereichs (Bereiche) vollständig eine raue Oberfläche auf.

Unter einer rauen Oberfläche wird eine zumindest im Wesentlichen offenporige Struktur, vorzugsweise eine vollständig offenporige Struktur, verstanden. An der rauen Oberfläche können beispielsweise Saucen nach dem Dippen besser haften bleiben. Auch verleiht die raue Oberfläche dem Dauerbrot ein ansprechendes äußeres Erscheinungsbild, da die vordefinierten Sollbruchstellen optisch in den Hintergrund treten.

Bei einer glatten Ausbildung ist hingegen die Oberfläche in dem entsprechenden Bereich geschlossen ausgebildet. Unter der geschlossenen Oberfläche wiederum kann das Dauerbrot beispielsweise eine offenporige Struktur aufweisen. Eine glatte Ausbildung des Dauerbrotes bedingt nicht zwangsläufig eine plane Oberfläche; vielmehr kann auch eine unebene Oberfläche des Dauerbrotes eine glatte Ausbildung aufweisen. Voraussetzung ist lediglich, dass die Oberfläche bei einer glatten Ausbildung geschlossen ausgebildet ist.

Zumindest ein vertiefter Bereich kann wiederum zumindest einen vertieften Teilbereich aufweisen.

Dabei kann zumindest ein vertiefter Teilbereich als Einkerbung ausgebildet sein. Hierunter wird beispielsweise eine spitz zulaufende oder keilförmige Ausgestaltung verstanden.

Zumindest ein vertiefter Teilbereich kann als Nut mit einem rechteckigen Querschnitt ausgebildet sein.

Zumindest ein vertiefter Teilbereich kann durch zwei den vertieften Teilbereich bildende Teilkantenbereiche gebildet sein, und zumindest einer, vorzugsweise jeder, der beiden Teilkantenbereiche kann abgerundet oder abgeschrägt oder stufig ausgebildet sein.

Das Dauerbrot kann in seiner Oberseite und/oder in seiner Unterseite jeweils zumindest ein Relief aufweisen. Ein Relief stellt einen Schriftzug, einen Namen, ein Logo, eine Marke oder dergleichen dar.

Das Dauerbrot umfasst zumindest die folgenden Rohstoffe:
a. wenigstens einen behandelten und/oder unbehandelten Mehltyp, vorzugsweise aus der Gruppe Weizen, Hafer, Roggen, Gerste, Reis, Hirse, Mais, Urgetreidesorten, vorzugsweise Dinkel oder Emmer, oder aus anderen Getreidearten und/oder aus Kombinationen der vorerwähnten Mehltypen,
b. wenigstens ein aus einer wasserhaltigen und/oder ölhaltigen Flüssigkeit bestehendes Lösungsmittel und
c. wenigstens eine als Einzelzutat oder als Mischzutat zugegebene Mittel- oder Kleinkomponente, wie zum Beispiel Salz, Zucker, Stärke, Eiweiß und/oder ein chemisches Treibmittel, vorzugsweise Natron, und/oder ein biologisches Triebmittel.

Als biologisches Triebmittel kann beispielsweise Sauerteig oder Hefe verwendet werden.

Dabei kann das Dauerbrot ein Malzextrakt und/oder ein Malzmehl und/oder eine Malzflocke und/oder ein Malzschrot umfassen. Durch Malzextrakt, Malzmehl, Malzflocke und/oder Malzschrot kann (können) die sensorischen Eigenschaften, wie Geruch, Geschmack und/oder Farbe verbessert werden.

Im Folgenden wird ein in der Zeichnung dargestelltes Ausführungsbeispiel der Erfindung erläutert. Es zeigen:
- Fig. 1a-c: einen Schnitt, eine Draufsicht sowie eine schräge Seitenansicht auf ein erstes Ausführungsbeispiel eines erfindungsgemäßen Dauerbrotes,
- Fig. 2a-c: einen Schnitt, eine Draufsicht sowie eine schräge Seitenansicht auf ein zweites Ausführungsbeispiel eines erfindungsgemäßen Dauerbrotes,
- Fig. 3a-c: einen Schnitt, eine Draufsicht sowie eine schräge Seitenansicht auf ein drittes Ausführungsbeispiel eines erfindungsgemäßen Dauerbrotes,
- Fig. 4a-c: einen Schnitt, eine Draufsicht sowie eine schräge Seitenansicht auf ein viertes Ausführungsbeispiel eines erfindungsgemäßen Dauerbrotes,
- Fig. 5a-c: einen Schnitt, eine Draufsicht sowie eine schräge Seitenansicht auf ein fünftes Ausführungsbeispiel eines erfindungsgemäßen Dauerbrotes,
- Fig. 6a-d: unterschiedliche Konturen eines vertieften Bereichs und
- Fig. 7: eine schräge Draufsicht auf ein rundes Dauerbrot.

In allen Figuren werden für gleiche bzw. gleichartige Bauteile übereinstimmende Bezugszeichen verwendet.

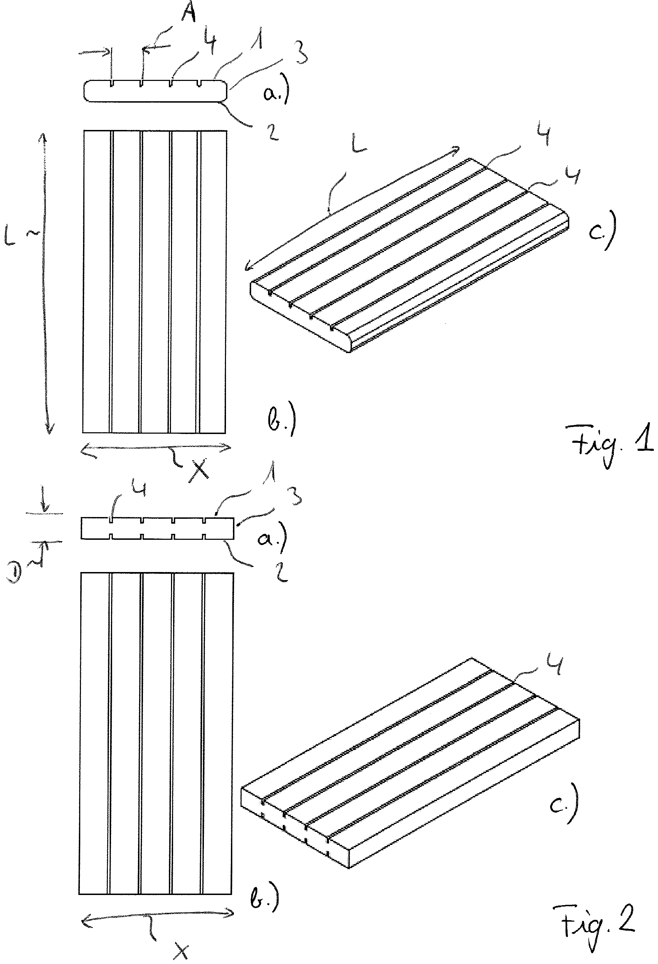

Die Fig. 1, 6 und 7 zeigen Ausgestaltungen eines erfindungsgemäßen Dauerbrotes mit einer Oberseite 1 und mit einer Unterseite 2 sowie mit einer umlaufenden, die Oberseite 1 und die Unterseite 2 verbindenden Seitenkante 3, wobei das Dauerbrot im Bereich seiner Oberseite 1 mehrere parallel zueinander ausgerichtete, als Sollbruchstelle dienende, linienförmig ausgebildete vertiefte Bereiche 4 aufweist, die sich jeweils von einer Stelle der Seitenkante 3 bis zu einer anderen Stelle der Seitenkante 3 erstrecken.

Bei den Ausführungsbeispielen nach den Fig. 2 bis 5 weist das Dauerbrot sowohl im Bereich seiner Oberseite 1 mehrere, parallel zueinander ausgerichtete, als Sollbruchstelle dienende, linienförmig ausgebildete vertiefte Bereiche 4 auf, als auch im Bereich seiner Unterseite 2 mehrere parallel zueinander ausgerichtete, als Sollbruchstelle dienende, linienförmig ausgebildete vertiefte Bereiche 4 auf.

Sämtliche vertiefte Bereiche 4 der Oberseite 1 weisen jeweils den gleichen Querschnitt auf und auch - sofern vorhanden - sämtliche vertiefte Bereiche 4 der Unterseite 2 weisen jeweils den gleichen Querschnitt auf.

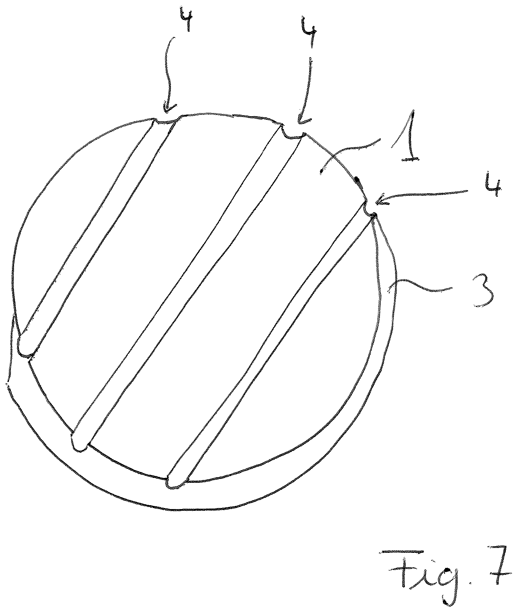

Die in den Fig. 1 bis 5 dargestellten Dauerbrote sind rechteckig ausgebildet. Die umlaufende Seitenkante 3 wird aus zwei Paaren an gegenüberliegenden Seitenkanten gebildet. Bei diesen Ausführungsbeispielen sind die vertieften Bereiche 4 aufgrund der rechteckigen Ausgestaltung des Dauerbrotes parallel zu einem der beiden Paare an gegenüberliegender Seitenkanten 3 ausgerichtet. In Fig. 7 ist ein rundes Dauerbrot dargestellt.

Die Länge L des Dauerbrotes liegt zwischen 8 cm und 15 cm, bevorzugt zwischen 10 cm und 13 cm, und die Breite X liegt zwischen 4 cm und 9 cm, vorzugsweise zwischen 6 cm und 8 cm. Der Abstand A zwischen zwei benachbarten vertieften Bereichen 4 auf der Oberseite 1 und/oder auf der Unterseite 2 liegt zwischen 0,1 cm und 3 cm, vorzugsweise zwischen 1 cm und 2,5 mm, besonders bevorzugt bei 1,5 cm.

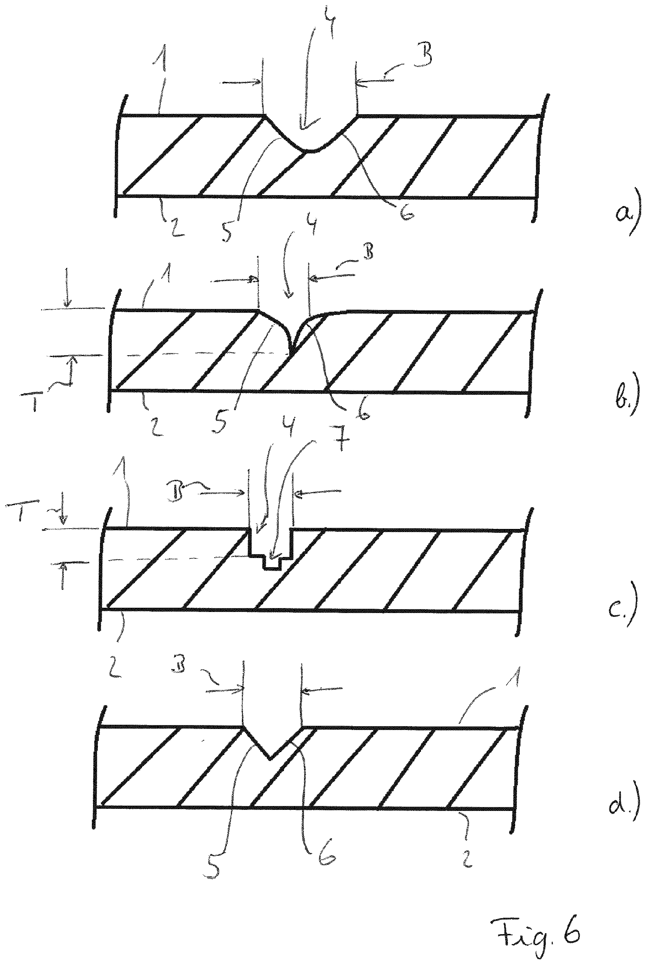

In allen Ausführungsbeispielen ist jeder vertiefte Bereich 4 geradlinig ausgebildet. Fig. 6d zeigt eine Variante, bei der der vertiefte Bereich 4 als Einkerbung ausgebildet ist. Bei den Ausführungsbeispielen nach den Fig. 1, 2 und 6c ist jeder vertiefte Bereich 4 als Nut mit einem rechteckigen Querschnitt ausgebildet.

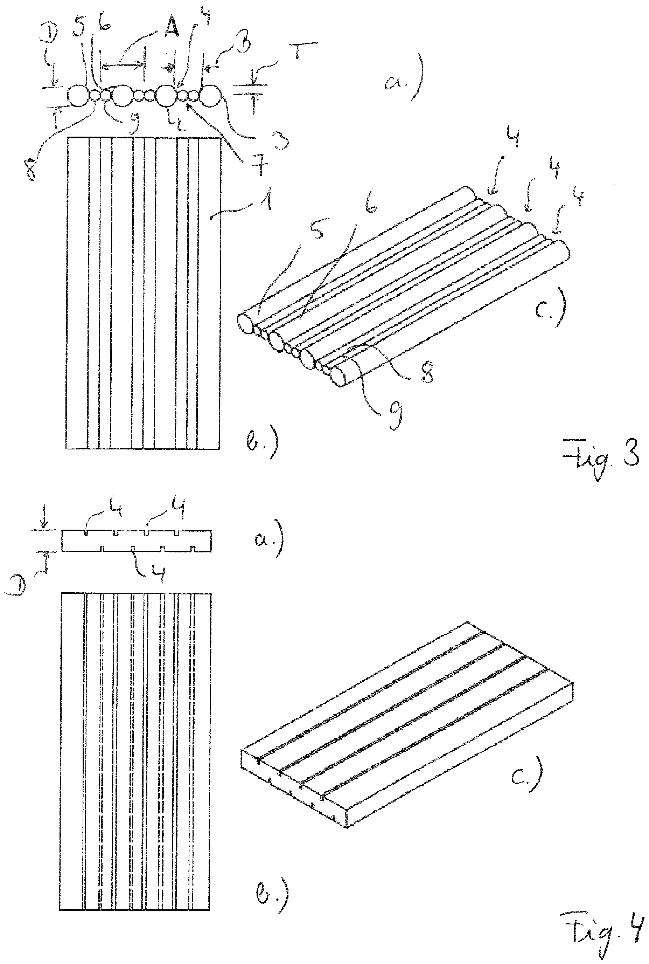

In den Fig. 3, 5, 6a, 6b und 7 ist jeder vertiefte Bereich 4 durch zwei den vertieften Bereich 4 bildende Kantenbereiche 5, 6 gebildet, wobei jeder der beiden Kantenbereiche 5, 6 abgerundet ausgebildet ist.

Die Dicke D des Dauerbrotes liegt zwischen 5,5 mm und 9,5 mm, vorzugsweise zwischen 6,5 mm und 9,0 mm, besonders bevorzugt zwischen 7,3 mm und 8,7 mm.

Die maximale Breite B eines jeden vertieften Bereiches 4 beträgt zwischen 0,2 mm und 10 mm, vorzugsweise zwischen 0,4 mm und 1,5 mm, besonders bevorzugt 0,5 mm, wobei die Tiefe T jedes vertieften Bereiches 4 zwischen 0,5 mm und 3 mm, vorzugsweise zwischen 1 mm und 2,5 mm, besonders bevorzugt zwischen 1,5 mm und 2 mm, beträgt.

In den Fig. 2, 3 und 5 sind Ausführungsbeispiele des erfindungsgemäßen Dauerbrotes gezeigt, die sowohl auf ihrer Oberseite 1 als auch auf ihrer Unterseite 2 jeweils mehrere vertiefte Bereiche 4 aufweisen, wobei die vertieften Bereiche 4 auf der Unterseite 2 und die vertieften Bereiche 4 auf der Oberseite 1 entlang ihrer gesamten Längserstreckung gegenüberliegend angeordnet sind.

Fig. 4 zeigt eine Ausgestaltung, bei der wiederum das Dauerbrot sowohl auf seiner Oberseite 1 als auch auf seiner Unterseite 2 jeweils mehrere vertiefte Bereiche 4 aufweist. Allerdrings sind hier die vertieften Bereiche 4 auf der Unterseite 2 gegenüber den vertieften Bereichen 4 auf der Oberseite 1 um den halben Abstand A zwischen zwei benachbarten vertieften Bereichen 4 entlang ihrer gesamten Längserstreckung parallel versetzt angeordnet.

Die Fig. 3 und 6c zeigen Ausgestaltungen, bei denen ein vertiefter Bereich 4 wiederum einen vertieften Teilbereich 7 aufweist. Der vertiefte Teilbereich 7 bei der Ausgestaltung nach Fig. 3 wird durch zwei den vertieften Teilbereich 7 bildende Teilkantenbereiche 8, 9 gebildet, wobei jeder der beiden Teilkantenbereiche 8, 9 abgerundet ausgebildet ist. In Fig. 6c ist eine Ausgestaltung gezeigt, bei der der vertiefte Teilbereich 7 als Nut mit einem rechteckigen Querschnitt ausgebildet ist.

Das Ausführungsbeispiel nach Fig. 1 weist vier geradlinig verlaufende vertiefte Bereiche 4 auf. Wird das Dauerbrot entlang jedes der vier vertieften Bereiche 4 durchgebrochen, können auf diese Weise - ohne dass es eines Hilfsmittels bedarf - fünf streifenförmige Produkte erzeugt werden. Diese streifenförmigen Produkte eignen sich beispielsweise ideal als Snackprodukte und können auch in ein Behältnis, das sehr kleine Abmessungen aufweist und in dem ein Dip bevorratet ist, eingetaucht werden.

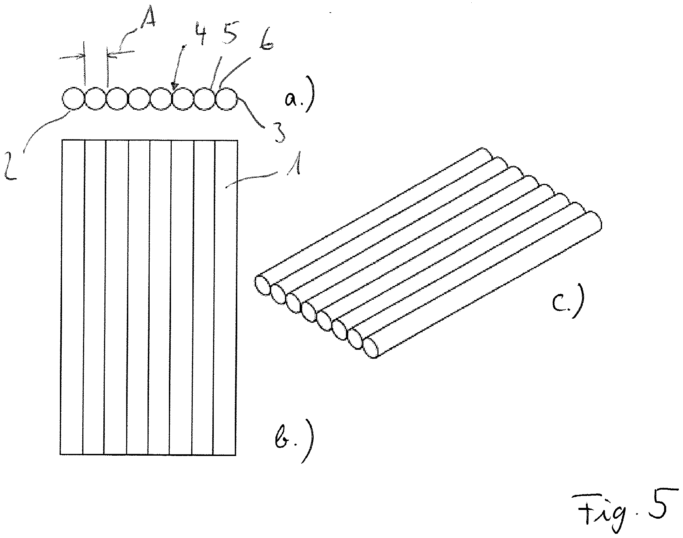

Bei der Ausgestaltung nach Fig 5 können beim Brechen ohne ein Hilfsmittel entlang der sieben als Sollbruchstelle dienenden, linienförmig ausgebildeten vertieften Bereiche 4 acht stickähnliche Knabber-/Snackprodukte erzeugt werden, die in dem dargestellten Ausführungsbeispiel einen runden Querschnitt aufweisen. Die acht stickähnlichen Knabber-/Snackprodukte können beliebig für den Verzehr genutzt werden. Sie können beispielsweise pur wie eine Salzstange verzehrt oder vor dem Verzehr in eine Sauce getaucht werden.

## Patentansprüche

1. Flächiges Dauerbrot, vorzugsweise Trockenflachbrot, mit einer Oberseite (1) und einer Unterseite (2) sowie mit einer umlaufenden, die Oberseite (1) und die Unterseite (2) verbindenden Seitenkante (3), **dadurch gekennzeichnet, dass** das Dauerbrot
- im Bereich der Oberseite (1) zumindest einen als Sollbruchstelle dienenden, linienförmig ausgebildeten vertieften Bereich (4) aufweist, der sich von einer Stelle der Seitenkante (3) bis zu einer anderen Stelle der Seitenkante (3), nämlich bis zu der gegenüberliegenden Stelle der Seitenkante (3), erstreckt,
und/oder
- im Bereich der Unterseite (2) zumindest einen als Sollbruchstelle dienenden, linienförmig ausgebildeten vertieften Bereich (4) aufweist, der sich von einer Stelle der Seitenkante (3) bis zu einer anderen Stelle der Seitenkante (3), nämlich bis zu der gegenüberliegenden Stelle der Seitenkante (3), erstreckt,
dass das Dauerbrot im Bereich seiner Oberseite (1) mehrere parallel zueinander ausgerichtete vertiefte Bereiche (4) aufweist und/oder im Bereich seiner Unterseite (2) mehrere parallel zueinander ausgerichtete vertiefte Bereiche (4) aufweist,
dass der Abstand A zwischen zwei benachbarten vertieften Bereichen (4) auf der Oberseite (1) und/oder auf der Unterseite (2) zwischen 0,1 cm und 3 cm, vorzugsweise zwischen 1 cm und 2,5 mm, besonders bevorzugt 1,5 cm, beträgt,
dass zumindest ein vertiefter Bereich (4) als Nut mit einem rechteckigen Querschnitt ausgebildet ist,
dass die maximale Breite B bei zumindest einem vertieften Bereich (4) zwischen 0,2 mm und 10 mm, vorzugsweise zwischen 0,4 mm und 1,5 mm, besonders bevorzugt 0,5 mm, beträgt,
dass die Tiefe T bei zumindest einem vertieften Bereich (4) zwischen 0,5 mm und 3 mm, vorzugsweise zwischen 1 mm und 2,5 mm, besonders bevorzugt zwischen 1,5 mm und 2 mm, beträgt,
und dass
a) die Oberseite (1) in den Bereichen außerhalb des (der) vertieften Bereichs (Bereiche) (4) vollständig eine raue Oberfläche aufweist
und
b) dass die Unterseite (2) in den Bereichen außerhalb des (der) vertieften Bereichs (Bereiche) (4) vollständig eine raue Oberfläche aufweist,
dass der Wassergehalt des Dauerbrots nach dem Herstellungsprozess zwischen 3 % und 9 %, vorzugsweise zwischen 4 % und 8,5 %, besonders bevorzugt zwischen 5 % und 6,5 %, liegt und
dass das Dauerbrot zumindest die folgenden Rohstoffe:
a. wenigstens einen behandelten und/oder unbehandelten Mehltyp, vorzugsweise aus der Gruppe Weizen, Hafer, Roggen, Gerste, Reis, Hirse, Mais, Urgetreidesorten, vorzugsweise Dinkel oder Emmer, oder aus anderen Getreidearten und/oder aus Kombinationen der vorerwähnten Mehltypen,
b. wenigstens ein aus einer wasserhaltigen und/oder ölhaltigen Flüssigkeit bestehendes Lösungsmittel und
c. wenigstens eine als Einzelzutat oder als Mischzutat zugegebene Mittel- oder Kleinkomponente, wie zum Beispiel Salz, Zucker, Stärke, Eiweiß und/oder ein chemisches Treibmittel, vorzugsweise Natron, und/oder ein biologisches Triebmittel
umfasst.

2. Dauerbrot nach dem vorhergehenden Anspruch, **dadurch gekennzeichnet, dass** zumindest ein vertiefter Bereich (4) geradlinig ausgebildet ist.

3. Dauerbrot nach einem der vorhergehenden Ansprüche, **dadurch gekennzeichnet, dass** das Dauerbrot viereckig, vorzugsweise rechteckig, ausgebildet ist und die umlaufende Seitenkante (3) aus zwei Paaren an gegenüberliegenden Seitenkanten (3) gebildet ist.

4. Dauerbrot nach dem vorherigen Anspruch, **dadurch gekennzeichnet, dass** zumindest ein vertiefter Bereich (4) parallel zu einem der beiden Paare an gegenüberliegenden Seitenkanten (3) ausgerichtet ist.

5. Dauerbrot nach einem der Ansprüche 3 oder 4, **dadurch gekennzeichnet, dass** das Dauerbrot eine Länge L zwischen 8 cm und 15 cm, vorzugsweise zwischen 10 cm und 13 cm, und eine Breite X zwischen 4 cm und 9 cm, vorzugsweise zwischen 6 cm und 8 cm, hat.

6. Dauerbrot nach einem der vorhergehenden Ansprüche, **dadurch gekennzeichnet, dass** die Dicke D des Dauerbrotes zwischen 5,5 mm und 9,5 mm, vorzugsweise zwischen 6,5 mm und 9,0 mm, besonders bevorzugt zwischen 7,3 mm und 8,7 mm, liegt.

7. Dauerbrot nach einem der vorhergehenden Ansprüche, **dadurch gekennzeichnet, dass** im Bereich der Oberseite (1) ein vertiefter Bereich (4) vorgesehen ist, der mittig im Bereich der Oberseite (1) angeordnet ist, und/oder im Bereich der Unterseite (2) ein vertiefter Bereich (4) vorgesehen ist, der mittig im Bereich der Unterseite (2) angeordnet ist.

8. Dauerbrot nach einem der vorhergehenden Ansprüche, **dadurch gekennzeichnet, dass** zumindest ein vertiefter Bereich (4) durch zwei den vertieften Bereich (4) bildende Kantenbereiche (5, 6) gebildet ist und zumindest einer, vorzugsweise jeder, der beiden Kantenbereiche (5, 6) abgerundet oder abgeschrägt oder stufig ausgebildet ist.

9. Dauerbrot nach einem der vorhergehenden Ansprüche, **dadurch gekennzeichnet, dass** das Dauerbrot sowohl auf seiner Oberseite (1) als auch auf seiner Unterseite (2) jeweils zumindest einen vertieften Bereich (4) aufweist, wobei der (die) vertiefte(n) Bereich(e) (4) auf der Unterseite (2) und der (die) vertiefte(n) Bereich(e) (4) auf der Oberseite (1) entlang ihrer gesamten Längserstreckung gegenüberliegend angeordnet sind.

10. Dauerbrot nach einem der vorhergehenden Ansprüche, **dadurch gekennzeichnet, dass** das Dauerbrot sowohl auf seiner Oberseite (1) als auch auf seiner Unterseite (2) jeweils zumindest einen vertieften Bereich (4) aufweist, wobei der (die) vertiefte(n) Bereich(e) (4) auf der Unterseite (2) gegenüber dem (den) vertieften Bereich(en) (4) auf der Oberseite (1) versetzt, vorzugsweise um den halben Abstand A zwischen zwei benachbarten vertieften Bereichen (4) entlang ihrer gesamten Längserstreckung parallel versetzt, angeordnet sind.

11. Dauerbrot nach einem der vorhergehenden Ansprüche, **dadurch gekennzeichnet, dass** sämtliche vertieften Bereiche (4) der Oberseite (1) jeweils den gleichen Querschnitt aufweisen und/oder sämtliche vertieften Bereiche (4) der Unterseite (2) jeweils den gleichen Querschnitt aufweisen.

12. Dauerbrot nach einem der Ansprüche 1 bis 9, **dadurch gekennzeichnet, dass** sämtliche vertieften Bereiche (4) der Oberseite (1) den gleichen Querschnitt aufweisen, dass sämtliche vertieften Bereiche (4) der Unterseite (2) den gleichen Querschnitt aufweisen und dass die Querschnitte im Bereich der Oberseite (1) und im Bereich der Unterseite (2) abweichend sind.

13. Dauerbrot nach einem der vorhergehenden Ansprüche, **dadurch gekennzeichnet, dass** zumindest ein vertiefter Bereich (4) wiederum zumindest einen vertieften Teilbereich (7) aufweist.

14. Dauerbrot nach dem vorhergehenden Anspruch, **dadurch gekennzeichnet, dass** zumindest ein vertiefter Teilbereich (7) als Einkerbung ausgebildet ist und/oder dass zumindest ein vertiefter Teilbereich (7) als Nut mit einem rechteckigen Querschnitt ausgebildet ist.

15. Dauerbrot nach einem der Ansprüche 13 bis 14, **dadurch gekennzeichnet, dass** zumindest ein vertiefter Teilbereich (7) durch zwei den vertieften Teilbereich (7) bildende Teilkantenbereiche (8, 9) gebildet ist und zumindest einer, vorzugsweise jeder, der beiden Teilkantenbereiche (8, 9) abgerundet oder abgeschrägt oder stufig ausgebildet ist.

16. Dauerbrot nach einem der vorhergehenden Ansprüche, **dadurch gekennzeichnet, dass** das Dauerbrot in seiner Oberseite (1) und/oder in seiner Unterseite (2) jeweils zumindest ein Relief aufweist.

17. Dauerbrot nach einem der vorhergehenden Ansprüche, **dadurch gekennzeichnet, dass** das Dauerbrot ein Malzextrakt und/oder ein Malzmehl und/oder eine Malzflocke und/oder ein Malzschrot umfasst.

## Claims

1. Flat long-life bread, preferably dry flat bread, with an upper side (1) and a lower side (2), as well as a circumferential side edge (3) connecting the upper side (1) and the lower side (2), **characterised in that** the long-life bread
- comprises in the region of the upper side (1) at least one depressed region (4) configured in the form of a line and serving as a predetermined break point, which extends from one side of the side edge (3) to the other side of the side edge (3), namely as far as the opposing side of the side edge (3),
and/or
- comprises in the region of the lower side (2) at least one depressed region (4) configured in the form of a line and serving as a predetermined break point, which extends from one side of the side edge (3) to the other side of the side edge (3), namely as far as the opposing side of the side edge (3),
that the long-life bread comprises in the region of its upper side (1) several depressed regions (4) aligned parallel to one another and/or comprises in the region of its lower side (2) several depressed regions (4) aligned parallel to one another,
that the distance interval A between two adjacent depressed regions (4) on the upper side (1) and/or on the lower side (2) is between 0.1 cm and 3 cm, preferably between 1 cm and 2.5 mm, and for particular preference 1.5 cm,
that at least one depressed region (4) is configured as a groove with a rectangular cross-section,
that the maximum width B of at least one depressed region (4) is between 0.2 mm and 10 mm, preferably between 0.4 mm and 1.5 mm, and for particular preference 0.5 mm,
that the depth T of at least one depressed region (4) is between 0.5 mm and 3 mm, preferably between 1 mm and 2.5 mm, and for particular preference between 1.5 mm and 2 mm,
and that
a) the upper side (1) exhibits a completely rough surface in the regions outside the depressed region(s) (4),
and
b) that the lower side (2) exhibits a completely rough surface in the regions outside the depressed region(s) (4),
that the water content of the long-life bread after the manufacturing process lies between 3% and 9%, preferably between 4% and 8.5%, and for particular preference between 5% and 6.5%, and
that the long-life bread comprises at least the following raw materials:
a. at least one treated and/or untreated flour type, preferably from the group of wheat, oats, rye, barley, rice, millet, maize, ancient grains, preferably spelt wheat or emmer, or other types of grain, and/or from combinations of the aforesaid flour types,
b. at least one solvent consisting of a liquid containing water and/or oil, and
c. at least one medium or small component, added as a single additive or mixed additive, such as, for example, salt, sugar, starch, egg white, and/or a chemical leavening agent, preferably baking soda, and/or a biological leavening agent.

2. Long-life bread according to the preceding claim, **characterised in that** at least one depressed region (4) is configured as a straight line.

3. Long-life bread according to any one of the preceding claims, **characterised in that** the long-life bread is configured as quadrilateral, preferable rectangular, and the circumferential side edge (3) is formed from two pairs of opposing side edges (3).

4. Long-life bread according to the preceding claim, **characterised in that** one depressed region (4) is aligned parallel to the two pairs of opposing side edges (3).

5. Long-life bread according to any one of claims 3 or 4, **characterised in that** the long-life bread has a length L of between 8 cm and 15 cm, preferably between 10 cm and 13 cm, and a width X of between 4 cm and 9 cm, preferably between 6 cm and 8 cm.

6. Long-life bread according to any one of the preceding claims, **characterised in that** the thickness D of the long-life bread is between 5.5 mm and 9.5 mm, preferably between 6.5 mm and 9.0 mm, and for particular preference between 7.3 mm and 8.7 mm.

7. Long-life bread according to any one of the preceding claims, **characterised in that** in the region of the upper side (1) a depressed region (4) is provided which is arranged in the middle of the region of the upper side (1), and/or a depressed region (4) is provided in the region of the lower side (2), which is arranged in the middle in the region of the lower side (2).

8. Long-life bread according to any one of the preceding claims, **characterised in that** at least one depressed region (4) is formed by two edge regions (5, 6) forming the depressed region (4), and at least one, preferably each, of the two edge regions (5, 6) is configured as rounded or slanted or stepped.

9. Long-life bread according to any one of the preceding claims, **characterised in that** the long-life bread comprises on both its upper side (1) as well as on its lower side (2) in each case at least one depressed region (4), wherein the depressed region(s) (4) on the lower side (2) and the depressed region(s) (4) on the upper side (1) are arranged opposite one another along their entire longitudinal extension.

10. Long-life bread according to any one of the preceding claims, **characterised in that** the long-life bread comprises both on its upper side (1) as well as on its lower side (2) in each case at least one depressed region (4), wherein the depressed region(s) (4) on the lower side (2) are arranged offset in relation to the depressed region(s) (4) on the upper side (1), preferably offset in parallel by half of the distance interval A between two adjacent depressed regions (4), along their entire longitudinal extension.

11. Long-life bread according to any one of the preceding claims, **characterised in that** all the depressed regions (4) of the upper side (1) in each case exhibit the same cross-section and/or all the depressed regions (4) of the lower side (2) in each case exhibit the same cross-section.

12. Long-life bread according to any one of the claims 1 to 9, **characterised in that** all the depressed regions (4) of the upper side (1) exhibit the same cross-section, that all the depressed regions (4) of the lower side (2) exhibit the same cross-section, and that the cross-sections in the region of the upper side (1) and in the region of the lower side (2) are divergent.

13. Long-life bread according to any one of the preceding claims, **characterised in that** at least one depressed region (4) in turn comprises at least one depressed part region (7).

14. Long-life bread according to any one of the preceding claims, **characterised in that** at least one depressed part region (7) is configured as a notch, and/or that at least one depressed part region (7) is configured as a groove with a rectangular cross-section.

15. Long-life bread according to any one of claims 13 to 14, **characterised in that** at least one depressed part region (7) is formed by two part edge regions (8, 9) forming the depressed part region (7), and at least one, preferably each, of the two part edge regions (8, 9) is configured as rounded or slanted or stepped.

16. Long-life bread according to any one of the preceding claims, **characterised in that** the long-life bread comprises at least one relief in its upper side (1) and/or in its lower side (2).

17. Long-life bread according to any one of the preceding claims, **characterised in that** the long-life bread comprises a malt extract ad/or a malt flour and/or a malt flake and/or a malt whole meal.

## Revendications

1. Pain aplati longue conservation, de préférence biscuit sec aplati comprenant une face supérieure (1) et une face inférieure (2), ainsi qu'une arête latérale périphérique (3) reliant ladite face supérieure (1) et ladite face inférieure (2), **caractérisé par le fait que** ledit pain longue conservation comporte,
- dans la région de la face supérieure (1), au moins une zone encaissée (4) de configuration linéaire, qui sert de point de rupture par destination et s'étend depuis une zone de l'arête latérale (3) jusqu'à une autre zone de l'arête latérale (3), c'est-à-dire jusqu'à la zone de ladite arête latérale (3) pointant à l'opposé, et/ou comporte,
- dans la région de la face inférieure (2), au moins une zone encaissée (4) de configuration linéaire, qui sert de point de rupture par destination et s'étend depuis une zone de l'arête latérale (3) jusqu'à une autre zone de l'arête latérale (3), c'est-à-dire jusqu'à la zone de ladite arête latérale (3) pointant à l'opposé ;
**par le fait que** ledit pain longue conservation est muni, dans la région de sa face supérieure (1) et/ou dans la région de sa face inférieure (2), de plusieurs zones encaissées (4) orientées parallèlement les unes aux autres ;
**par le fait que** l'espacement A entre deux zones encaissées (4) voisines, sur la face supérieure (1) et/ou sur la face inférieure (2), mesure entre 0,1 cm et 3 cm, préférentiellement entre 1 cm et 2,5 mm, 1,5 cm avec préférence particulière ;
**par le fait qu'**au moins une zone encaissée (4) est réalisée sous la forme d'une rainure de section transversale rectangulaire ;
**par le fait que** la largeur maximale B mesure, dans au moins une zone encaissée (4), entre 0,2 mm et 10 mm, préférentiellement entre 0,4 mm et 1,5 mm, 0,5 mm avec préférence particulière ;
**par le fait que** la profondeur T mesure, dans au moins une zone encaissée (4), entre 0,5 mm et 3 mm, préférentiellement entre 1 mm et 2,5 mm, entre 1,5 mm et 2 mm avec préférence particulière ;
**par le fait que**
a) la face supérieure (1) est intégralement pourvue d'une surface rugueuse dans les régions situées à l'extérieur de la (des) zone(s) encaissée(s) (4)
et
b) la face inférieure (2) est intégralement pourvue d'une surface rugueuse dans les régions situées à l'extérieur de la (des) zone(s) encaissée(s) (4) ;
**par le fait qu'**à l'issue du processus de fabrication, la teneur en eau dudit pain longue conservation est comprise entre 3 % et 9 %, préférentiellement entre 4 % et 8,5 %, entre 5 % et 6,5 % avec préférence particulière ; et
**par le fait que** ledit pain longue conservation inclut au moins les matières premières suivantes :
a. au moins un type de farine traité et/ou non traité, émanant préférentiellement du groupe blé, avoine, seigle, orge, riz, millet, maïs, variétés de céréales ancestrales, de préférence de l'épeautre ou de l'amidonnier, voire d'autres espèces céréalières, et/ou de combinaisons des types de farines précités,
b. au moins un solvant constitué d'un fluide renfermant de l'eau et/ou de l'huile, et
c. au moins un agent ou un petit composant ajouté en tant qu'ingrédient unique ou ingrédient mélangé comme, par exemple, du sel, du sucre, de l'amidon, des protéines et/ou un levain chimique, préférentiellement de la soude, et/ou un levain biologique.

2. Pain longue conservation selon la revendication précédente, **caractérisé par le fait qu'**au moins une zone encaissée (4) est de configuration linéaire.

3. Pain longue conservation selon l'une des revendications précédentes, **caractérisé par le fait que** ledit pain longue conservation est de réalisation carrée, de préférence rectangulaire, et l'arête latérale périphérique (3) est constituée de deux paires d'arêtes latérales (3) opposées.

4. Pain longue conservation selon la revendication précédente, **caractérisé par le fait qu'**au moins une zone encaissée (4) est orientée parallèlement à l'une des deux paires d'arêtes latérales (3) opposées.

5. Pain longue conservation selon l'une des revendications 3 ou 4, **caractérisé par le fait que** ledit pain longue conservation présente une longueur L comprise entre 8 cm et 15 cm, de préférence entre 10 cm et 13 cm, et une largeur X comprise entre 4 cm et 9 cm, de préférence entre 6 cm et 8 cm.

6. Pain longue conservation selon l'une des revendications précédentes, **caractérisé par le fait que** l'épaisseur D dudit pain longue conservation est comprise entre 5,5 mm et 9,5 mm, préférentiellement entre 6,5 mm et 9,0 mm, entre 7,3 mm et 8,7 mm avec préférence particulière.

7. Pain longue conservation selon l'une des revendications précédentes, **caractérisé par le fait qu'**une zone encaissée (4) prévue dans la région de la face supérieure (1) est disposée centralement dans ladite région de la face supérieure (1), et/ou une zone encaissée (4) prévue dans la région de la face inférieure (2) est disposée centralement dans ladite région de la face inférieure (2).

8. Pain longue conservation selon l'une des revendications précédentes, **caractérisé par le fait qu'**au moins une zone encaissée (4) est constituée de deux régions marginales (5, 6) formant ladite zone encaissée (4), et au moins l'une, de préférence chacune des deux régions marginales (5, 6) est de réalisation arrondie ou biseautée ou étagée.

9. Pain longue conservation selon l'une des revendications précédentes, **caractérisé par le fait que** ledit pain longue conservation est doté, à chaque fois, d'au moins une zone encaissée (4), tant sur sa face supérieure (1) que sur sa face inférieure (2), sachant que la (les) zone(s) encaissée(s) (4) située(s) sur ladite face inférieure (2), et la (les) zone(s) encaissée(s) (4) située(s) sur ladite face supérieure (1) est (sont) agencée(s) à l'opposé le long de l'intégralité de son (de leur) étendue longitudinale.

10. Pain longue conservation selon l'une des revendications précédentes, **caractérisé par le fait que** ledit pain longue conservation est muni, à chaque fois, d'au moins une zone encaissée (4), tant sur sa face supérieure (1) que sur sa face inférieure (2), sachant que la (les) zone(s) encaissée(s) (4) située(s) sur ladite face inférieure (2) est (sont) agencée(s) avec décalage vis-à-vis de la (des) zone(s) encaissée(s) (4) située(s) sur ladite face supérieure (1), de préférence avec décalage parallèle, le long de l'intégralité de son (de leur) étendue longitudinale, de la moitié de l'espacement A entre deux zones encaissées (4) voisines.

11. Pain longue conservation selon l'une des revendications précédentes, **caractérisé par le fait que** toutes les zones encaissées (4) de la face supérieure (1) présentent à chaque fois la même section transversale, et/ou toutes les zones encaissées (4) de la face inférieure (2) présentent à chaque fois la même section transversale.

12. Pain longue conservation selon l'une des revendications 1 à 9, **caractérisé par le fait que** toutes les zones encaissées (4) de la face supérieure (1) présentent la même section transversale ; **par le fait que** toutes les zones encaissées (4) de la face inférieure (2) présentent la même section transversale ; et **par le fait que** les sections transversales sont différentes dans la région de ladite face supérieure (1) et dans la région de ladite face inférieure (2).

13. Pain longue conservation selon l'une des revendications précédentes, **caractérisé par le fait qu'**au moins une zone encaissée (4) comporte, à son tour, au moins une zone partielle (7) encaissée.

14. Pain longue conservation selon la revendication précédente, **caractérisé par le fait qu'**au moins une zone partielle (7) encaissée est réalisée sous la forme d'une encoche ; et/ou **par le fait qu'**au moins une zone partielle (7) encaissée est réalisée sous la forme d'une rainure de section transversale rectangulaire.

15. Pain longue conservation selon l'une des revendications 13 à 14, **caractérisé par le fait qu'**au moins une zone partielle (7) encaissée est constituée de deux régions marginales partielles (8, 9) formant ladite zone partielle (7) encaissée, et au moins l'une, de préférence chacune des deux régions marginales partielles (8, 9) est de réalisation arrondie ou biseautée ou étagée.

16. Pain longue conservation selon l'une des revendications précédentes, **caractérisé par le fait que** ledit pain longue conservation est pourvu, à chaque fois, d'au moins un relief dans sa face supérieure (1) et/ou dans sa face inférieure (2).

17. Pain longue conservation selon l'une des revendications précédentes, **caractérisé par le fait que** ledit pain longue conservation inclut un extrait de malt et/ou une farine de malt et/ou un flocon de malt et/ou un concas de malt.
